# EUROPEAN PATENT APPLICATION

(11) **EP 1 813 538 A2**
(43) Date of publication of application: **01.08.2007**
(21) Application number: 07001311.5
(22) Date of filing: 22.01.2007
(51) Int. Cl.: B65D 5/42, G11B 23/04, G11B 33/02

(54) **Cartridge accomodating case**

(30) Priority: 30.01.2006 JP 2006020750; 31.01.2006 JP 2006023192
(71) Applicant: Fujifilm Corporation, Minato-ku Tokyo (JP)
(72) Inventor: Imai, Fumihito, Odawara-shi Kanagawa (JP)
(74) Representative: Höhfeld, Jochen

(57) **Abstract**

A cartridge accommodating case (100) for accommodating flat body-shaped cartridges (21) in each of which a reel with a magnetic tape wound therearound is disposed, including: an upper case (23); and a lower case (25), the upper case (23) and the lower case (25) being adapted to be superposed on each other to form at least one partitioned chamber (27) for holding a cartridge group (29) formed into a block by juxtaposing a plurality of cartridges (21) in a thicknesswise direction thereof, wherein a tab (51) is extendedly provided on a peripheral edge of each of the upper case (53) and the lower case (25).

## Description

### FIELD OF THE INVENTION

The present invention relates to a cartridge accommodating case for accommodating flat body-shaped cartridges in each of which a reel with a magnetic tape wound therearound is disposed.

### BACKGROUND OF THE INVENTION

Conventionally, in cases where magnetic recording tape cartridges of a one-reel type are collectively packaged, the cartridges are accommodated in cases in cartridge units, and a plurality of such cases are packaged in a corrugated cardboard box to retain cushioning characteristics.

However, in the case of this collective packaging, since the cartridges are accommodated in the corrugated cardboard box, it is necessary to open the corrugated cardboard box in order to confirm the presence or absence, types, and the like of the cartridges, so that there has been a problem in terms of convenience. In addition, there has been a problem in that if the corrugated cardboard is used in the packaging, the corrugated cardboard becomes wet when immersed in water, and the corrugated cardboard box becomes broken.

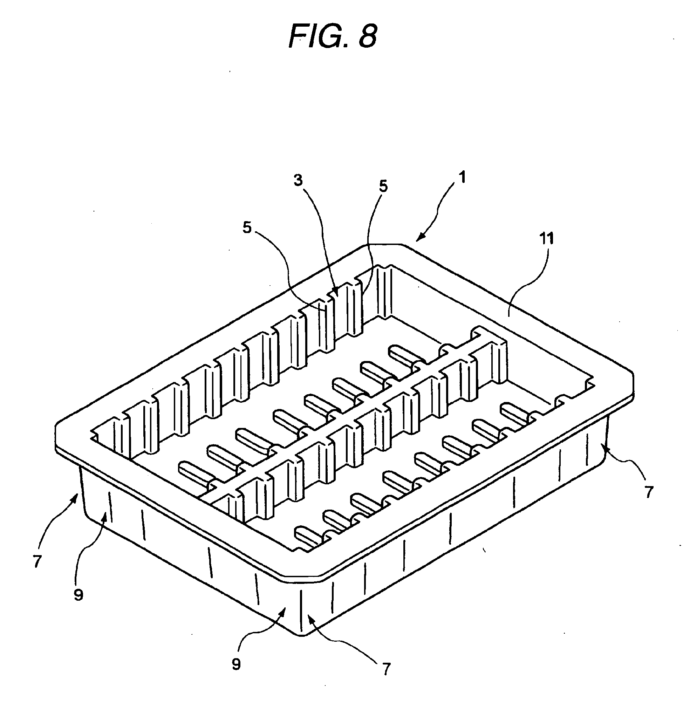

Under these circumstances, a case in which cartridges are collectively packaged in a transparent plastic which does not cause a hindrance to the strength of the case even if it is wet with water and which allows the contents to be visible, is disclosed in a non-patent document (LTO-Ultrium L-pack, [online], TDK Corporation, Internet <URL:http://www.tdk.com/professional/lto/ltolpack.ht. ml>), and has become available on the market, as shown in Fig. 8.

### SUMMARY OF THE INVENTION

However, in a case 1 disclosed in the aforementioned non-patent document, the interior of the case 1 is partitioned into a plurality of accommodating spaces 3 for accommodating individual cartridges by a plurality of partition projections 5, and the cartridges are respectively stored in these accommodating spaces 3 in cartridge units. In other words, the cartridges are dispersedly accommodated. For this reason, the cartridges are accommodated one by one in the actual accommodating operation, so that there has been a problem in that the ease of use becomes poor particularly in the case where there is a large quantity of cartridges. In addition, in the above-described case 1, since the interior of the case 1 is partitioned into the individual accommodating spaces 3, the entire accommodating area (i.e., the opening area of the upper plane of the case 1) is equally divided by the individual accommodating spaces 3. For this reason, when the case 1 is dropped with far end portions 7 and 9 of lateral sides of the case 1 facing downward, the load of substantially the total number of accommodated cartridges is concentrated at these far end portions 7 and 9. Hence, there has been a problem in that the impact resistance is insufficient, and the impact absorbing capability when the case 1 is dropped is low.

In addition, in the above-described case 1, a flange 11 is formed around the periphery of the opening of the case 1, and a plurality of fitting means constituted by unillustrated protruding portions and recessed portions for fitting to counterparts of another case 1 are formed on this flange 11 symmetrically about a case center. Further, as two cases 1 with their flanges 11 opposed to each other are superposed on each other vertically, these fitting means are engaged to form the accommodating spaces 3 for the cartridges.

However, if the upper case 1 and the lower case 1 are of the same shape, their opposing flanges 11 are superposed on each other with identical outer shapes over their entire peripheries, so that particularly in a case where the fitting of the fitting means is firm, the opening of the upper case 1 with respect to the lower case 1 is difficult.

The present invention has been devised in view of the above-described circumstances, and its first object is to obtain a cartridge accommodating case which has high efficiency in the accommodating operation while retaining the impact resistance. A second object of the invention is to obtain a cartridge accommodating case which makes it possible to easily open the superposed assembly of the cases which have been integrated by causing the protruding portions and recessed portions to each other.

The above objects of the invention can be attained by the following configurations.
(1) A cartridge accommodating case for accommodating flat body-shaped cartridges in each of which a reel with a magnetic tape wound therearound is disposed, comprising: an upper case; and a lower case, the upper case and the lower case being adapted to be superposed on each other to form at least one partitioned chamber for holding a cartridge group formed into a block by juxtaposing a plurality of cartridges in a thicknesswise direction thereof, wherein a tab is extendedly provided on a peripheral edge of each of the upper case and the lower case.

According to this cartridge accommodating case, with respect to the upper case and the lower case integrated by mutually engaging the protruding portions and the recessed portions, it is easily possible to cause opening forces to act by holding the tabs provided at the peripheral edges of the respective cases and moving them in mutually opposite directions. In other words, the cases can be reliably engaged with each other with such a large engaging force that the disengagement would be difficult if the tabs 51 were not provided.
(2) The cartridge accommodating case according to (1) above, wherein each of the upper case and the lower case is formed by a quadrangular outer shape having four corner portions at its periphery, and a bevel portion is formed at at least one corner portion of each of the upper case and the lower case by removing this corner portion along an inclined side, the tab being formed on the bevel portion. According to this cartridge accommodating case, since the tab is extendedly provided on the bevel portion formed at at least one corner portion of the quadrangular outer shape, the tab can be disposed at a position where it is easy to hold.
(3) The cartridge accommodating case according to (2) above, wherein the tab extendedly provided on the bevel portion is formed on an inner side of a quadrangular region enveloping four outer sides of the case.

According to this cartridge accommodating case, the tab does not project from the aforementioned quadrangular region, so that even if the accommodating case is accommodated in a corrugated cardboard box having the same inner shape as the outer shape of the case, the tab does not hinder the accommodation.
(4) The cartridge accommodating case according to (2) or (3) above, wherein the bevel portion is formed at at least two adjacent ones of the corner portions, and the tabs extendedly provided respectively at the two corner portions are each disposed in such a manner as to be offset from a center of the inclined side of the bevel portion.

According to this cartridge accommodating case, the tabs are respectively disposed on the bevel portions, which are provided at the two adjacent ones of the corner portions of the case, in such a manner as to be offset from the center of the inclined side. Therefore, if identical cases molded by the same mold as the upper case and the lower case are superposed on each other vertically, the upper and lower tabs are disposed in such a manner as to be offset from each other along the inclined side at the vertically superposed two corner portions. Hence, it becomes possible to easily perform the opening operation in which the tab of the lower case is pulled downward, and the tab of the upper case is pulled upward.
(5) The cartridge accommodating case according to any one of(1) to (4) above, wherein each of the upper case and the lower case is constituted by an integrally molded piece of a plastic resin.

According to this cartridge accommodating case, a high-precision upper case and lower case can be mass produced easily at low cost by using a material which is relatively easily available.
(6) The cartridge accommodating case according to (5) above, wherein the plastic resin includes any one of polyethylene terephthalate, polypropylene, and polystyrene.

According to this cartridge accommodating case, as the plastic resin is any one of polyethylene terephthalate, polypropylene, and polystyrene, the material is easily available, and easy and low-cost vacuum molding is possible.
(7) The cartridge accommodating case according to (5) or (6), wherein the plastic resin is translucent.

According to this cartridge accommodating case, when the upper case and the lower case are engaged with each other, and the partitioned chambers are set in a hermetically sealed state, the cartridges accommodated in the partitioned chambers are visible from the outside, so that the state of accommodation of the cartridges in the hermetically sealed partitioned chambers can be easily grasped.
(8) The cartridge accommodating case according to any one of (5) to (7) above, wherein each of the upper case and the lower case is formed by using a plastic resin sheet having a thickness of 0.5 to 2.0 mm and subjecting it to drawing.

According to this cartridge accommodating case, as each of the upper case and the lower case is formed by using a plastic resin sheet having a thickness of 0.5 to 2.0 mm and subjecting it to drawing, the minimum structural strength of the partitioned chambers for accommodating the plurality of cartridge groups can be economically ensured. Further, the overall weight of the case can be set to a minimum while satisfying the minimum strength. In addition, as the case is formed with the aforementioned thickness, appropriate deformation becomes possible when an external force is applied, thereby making it possible to optimally secure the impact absorbing action with respect to the accommodated cartridges. In other words, if the case is thinner than the aforementioned thickness, the case becomes excessively deformable, so that the impact absorption effect declines. On the other hand, if the case is thicker than the aforementioned thickness, the cartridge is difficult to deform, so that the impact force is transmitted directly to the accommodated cartridges. In this construction, since the sheet thickness of the plastic resin is set to the aforementioned thickness, the formation of optimal impact absorbing portions (crushable zones) becomes possible.
(9) The cartridge accommodating case according to any one of (1) to (8) above, the upper case and the lower case have an identical structure for forming the partitioned chamber by engaging with each other and each have a tapered shape in a direction away from an engaging portion thereof, and biting preventing means are provided which have different shapes at portions at diagonally opposing positions within a range of a peripheral edge portion of the case.

According to this cartridge accommodating case, as compared with the case where the plurality of cartridges are dispersedly accommodated in the same accommodation area, by the portion in which the plurality of cartridges are accommodated by being put together in a block, it becomes possible to secure a surplus area which does not contribute to the accommodation. This surplus area portion can be made use of as an impact absorbing portion (so-called crushable zone). Further, it becomes unnecessary to accommodate the plurality of cartridges individually in the conventional manner, and the plurality of cartridges held by being superposed one on top of another in their thicknesswise direction can be collectively accommodated in the partition chamber. In addition, since each of the upper case and the lower case having an identical structure has in its surplus portion a tapered shape in a direction away from an engaging portion thereof, when a plurality of empty upper cases and lower cases are stacked, the cases are consecutively fitted into each other by virtue of the tapered shapes and can be stacked compactly, thereby extremely facilitating their accommodation and movement. Furthermore, when the cases in a stacked state are separated one by one, since the cases are held without excessively biting onto each other, the separation can be effected easily by virtue of the biting preventing means which are provided with different shapes at portions at diagonally opposing positions within the range of peripheral edge portions of the cases.
(10) The cartridge accommodating case according to any one of (1) to (9) above, wherein each of the biting preventing means is a portion of a cushioning rib which is projectingly formed on an outer side surface including the range of the peripheral edge portion of the case.

According to this cartridge accommodating case, since cushioning ribs are disposed which are projectingly formed on the outer side surface including the range of the peripheral edge portion of the case, and the cushioning ribs at diagonally opposing positions are provided with different shapes, impact absorption can be effected reliably. Also, when the cases in the stacked state are separated one by one, since the cases are held without excessively biting onto each other, the separation can be effected easily.

According to the cartridge accommodating case in accordance with the invention, with respect to the upper case and the lower case integrated by being superposed on each other, mutually moving-away forces can be respectively caused to act by holding the tabs provided on the peripheral edges of the respective cases and moving them in mutually opposite directions. Even in a case where the engagement is firm, it becomes possible to disengage the both cases and easily open the accommodating case only when it is required to do so. In other words, the cases can be reliably engaged with each other with such a large engaging force that the disengagement would be difficult if the tabs were not provided.

According to the cartridge accommodating case in accordance with (9) and (10) above, when the upper cases and the lower cases are stacked or separated one by one before the accommodation of the cartridges or after the removal of the cartridges, the cases are fitted to each other to a certain degree to facilitate handling of their accommodation and movement. Additionally, since the biting of the cases onto each other is prevented appropriately, the cases can be separated easily. Since the partitioned chamber is formed for holding the cartridge group formed into a block by juxtaposing the plurality of cartridges in their thicknesswise direction, as compared with the case where the plurality of cartridges are dispersedly accommodated in the same accommodation area, by the portion in which the plurality of cartridges are put together in one block, it becomes possible to secure a surplus area which does not contribute to the accommodation. By using this surplus area portion as an impact absorbing portion (so-called crushable zone), it is possible to absorb the impact such as at the time of the dropping of the case and improve the impact resistance against the cartridges. In addition, since it is not necessary to accommodate the plurality of cartridges individually, the plurality of cartridges superposed and held in their thicknesswise direction can be collectively accommodated in the partitioned chamber, and accommodation can be performed efficiently in a short time, thereby making it possible to substantially improve the efficiency in the accommodating operation.

### BRIEF DESCRIPTION OF THE DRAWINGS

Fig. 1 is an exploded perspective view in which an upper case and a lower case of an accommodating case in accordance with the invention are separated;
Figs. 2A and 2B are explanatory diagrams of the upper case shown in Fig. 1, in which Fig. 2A is a plan view thereof and Fig. 2B is a side view thereof;
Fig. 3 is a side view taken in the direction of arrow A in Fig. 2A;
Fig. 4 is an external view of essential portions of the accommodating case, illustrating cushioning ribs provided on outer wall surfaces of a partitioned chamber;
Fig. 5 is an enlarged view of an essential portion, illustrating a tab provided projectingly on a bevel portion of an accommodating case flange;
Fig. 6 is a perspective view of essential portions, illustrating the mutual positional relationship of the respective tabs of the upper case and the lower case engaged with each other;
Fig. 7 is an enlarged cross-sectional view illustrating the shapes of a recessed portion and a protruding portion;
Fig. 8 is a perspective view illustrating a conventional accommodating case;
Fig. 9 is a front view of the upper case and the lower case when they are superposed on each other after the cartridge accommodating case shown in Fig. 1 has been used;
Fig. 10 is a rear view of the upper case and the lower case when they are superposed on each other after the cartridge accommodating case shown in Fig. 1 has been used;
Fig. 11 is a plan view after the upper case and the lower case shown in Fig. 9 have been superposed on each other; and
Fig. 12 is a rear view after the upper case and the lower case shown in Fig. 10 have been superposed on each other.

### DETAILED DESCRIPTION OF THE INVENTION

Referring now to the accompanying drawings, a description will be given of the preferred embodiments of the cartridge accommodating case in accordance with the invention.

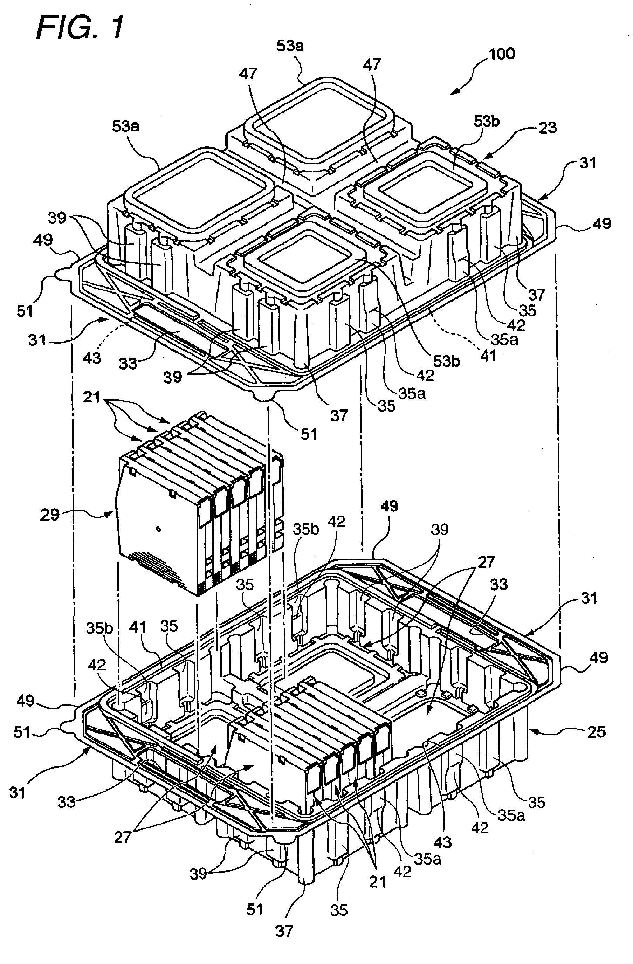

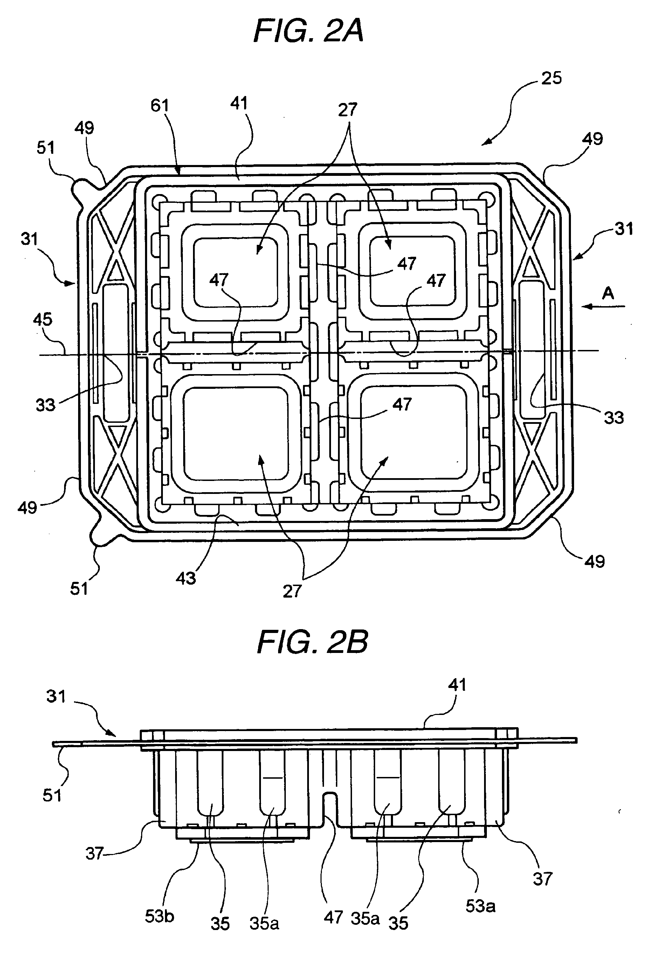

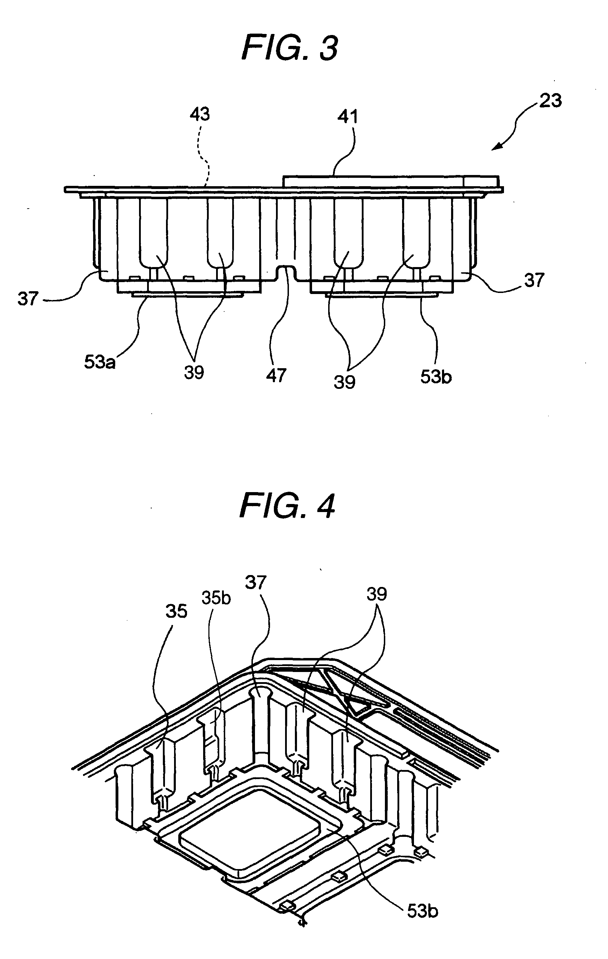

Fig. 1 is an exploded perspective view in which an upper case and a lower case of the accommodating case in accordance with the invention are separated. Figs. 2A and 2B are explanatory diagrams of the upper case shown in Fig. 1, in which Fig. 2A is a plan view thereof and Fig. 2B is a side view thereof. Fig. 3 is a side view taken in the direction of arrow A in Fig. 2A.

A cartridge accommodating case (hereafter simply referred to as the "accommodating case") 100 in accordance with this embodiment can be suitably used for accommodating flat body-shaped cartridges 21 in each of which, for example, a reel with a magnetic tape wound therearound is disposed.

The cartridge 21 has the magnetic tape-wound reel provided therein such that its axis is oriented in the thicknesswise direction. In this embodiment, a description is given by citing an example in which the cartridge 21 is formed in the shape of a flat body which is square in a plan view, but the cartridge may be alternatively formed in the shape of a rectangular flat body.

The accommodating case 100 becomes openable as an upper case 23 and a lower case 25, which are of the same structure, are superposed on each other from above and below and engaged with each other. As the upper case 23 and the lower case 25 are engaged, a plurality of partitioned chambers 27 are adapted to be formed therein. In this embodiment, four partitioned chambers 27 are formed. Cartridge groups 29, which are each formed into a block by juxtaposing the plurality of cartridges 21 in their thicknesswise direction as shown in Fig. 1, can be held in the respective partitioned chambers 27. It should be noted that the cartridges 21 are uprightly disposed in such an orientation that their tape taking-out ports are set on the upper side, as shown in Fig. 1, so that the tape taking-out ports having weak strength are located on the upper side when the cartridges 21 are accommodated in the accommodating case 100. More preferably, the cartridges 21 are disposed such that the tape taking-out ports in two adjacent pairs of the partitioned chambers 27 face each other. In that case, the tape taking-out ports are provided on the interior side of the accommodating case 100, and therefore the tape taking-out ports can be protected from an impact from outside of the case.

In this embodiment, one partitioned chamber 27 forms a substantially identical accommodation volume as the volume of the cartridge group 29. Accordingly, even if the cartridges 21 are packed haphazardly in each partitioned chamber 27, since there are no partition walls for the individual cartridges, the cartridges 21 can be put in easily. For example, several cartridges 21 can be grasped together and packed, so that the efficiency of accommodating operation is improved remarkably as compared with the conventional arrangement in which the cartridges 21 are grasped and inserted one by one.

Each partitioned chamber 27 has a shape in which its side walls are slightly tapered inwardly of the accommodating 100 as the side walls extend away from the engaging edge portions of the upper case 23 and the lower case 25. Therefore, before the accommodation of the cartridges 21 or after the removal of the cartridges 21, when the plurality of empty upper cases 23 and lower cases 25 are stacked and handled as a batch, the cases are consecutively fitted into each other by virtue of the tapered shapes of the partitioned chambers 27 and can be stacked compactly, thereby extremely facilitating their accommodation and movement.

As compared with the case where the plurality of cartridges 21 are dispersedly accommodated in the same accommodation area, by the portion in which the plurality of cartridges 21 are accommodated by being put together in blocks, it becomes possible to secure a surplus area which does not contribute to the accommodation. In the accommodating case 100, this surplus area portion is made use of as an impact absorbing portion (so-called crushable zone).

As portions of the surplus area portions, first cushioning ribs 39 are formed on outer wall surfaces of the partitioned chambers 27 making up the side surfaces of the accommodating case 100 in the thicknesswise direction of the cartridges 21 accommodated in the partitioned chambers 27. In this embodiment, two first cushioning ribs 39 are formed outwardly projectingly on one side wall surface of each partitioned chamber 27 corresponding to the thicknesswise direction of the cartridges 21. Furthermore, second cushioning ribs 35 are formed on the other side wall surfaces of the accommodating case 100 corresponding to a direction perpendicular to the thicknesswise direction of the cartridges 21. Similarly, two second cushioning ribs 35 are formed outwardly projectingly for each partitioned chamber 27. These first and second cushioning ribs 39 and 35 are molded simultaneously when the accommodating case 100 is molded from a flexible resin.

The respective cushioning ribs 39 and 35 have outwardly protruding shapes provided with the aforementioned inwardly tapered shapes along their longitudinal direction away from the engaging edge portions of the upper case 23 and the lower case 25. In the event that an object has collided against the partitioned chamber 27 from the outside to apply an impact in the thicknesswise direction of the cartridges 21, the first cushioning ribs 39 are able to absorb the impact by being deflected by themselves. Similarly, in the event that an object has collided against the partitioned chamber 27 from the outside to apply an impact in the widthwise direction of the cartridges 21, the second cushioning ribs 35 are able to absorb the impact by being deflected by themselves. Namely, gaps are formed between the outer wall surface of the case and the cartridges 21 by the first cushioning ribs 39 and the second cushioning ribs 35, and these cushioning ribs 39 and 35 defining these gaps serve as a cushioning material, and are adapted to enhance the impact resistance.

The second cushioning ribs 35 are included in the range of peripheral edge portions of, for instance, the lower case 25, and are constructed such that, on the front side (on the lower right-hand side in Fig. 1) of the lower case 25, in terms of their inner depth the two ribs in the center (second cushioning ribs 35a) are stepped to be shallow, and the two ribs on both outer sides thereof are deep. In contrast, on the rear side of the lower case 25, in terms of their inner depth the two ribs in the center are deep, and the two ribs on both outer sides thereof (second cushioning ribs 35b) are stepped to be shallow. Namely, the arrangement provided is such that the stepped shallow cushioning ribs and the deep cushioning ribs on the front side and counterparts on the rear side are positionally offset from each other diagonally. The upper case 23 is also constructed in the same way as the lower case 25, such that, on the rear side thereof, in terms of their inner depth the two ribs in the center are stepped to be shallow, and the two ribs on both outer sides thereof are deep. In contrast, on the front side of upper case 23, in terms of their inner depth the two ribs in the center are deep, and the two ribs on both outer sides thereof are stepped to be shallow. In these second cushioning ribs 35a and 35b, the stepped portions on the inner depth side serve as stoppers 42 which are biting preventing means.

When the plurality of empty upper cases 23 and lower cases 25 are stacked before the accommodation of the cartridges 21 or after the removal of the cartridges 21, the stoppers 42 function such that when the second cushioning ribs 35 not provided with the stoppers 42 are inserted over the second cushioning ribs 35a and 35b provided with the stoppers 42 and configured shallowly, the second cushioning ribs 35 not provided with the stoppers 42 abut against the stoppers 42, thereby preventing at that position further insertion of the second cushioning ribs 35 not provided with the stoppers 42.

Thus, when the cases 23 and 25 in a stacked state are separated one by one, since the cases 23 and 25 are held without excessively biting onto each other, the separation can be effected easily by virtue of the biting preventing means which are provided with different shapes at portions (second cushioning ribs) at diagonally opposing positions within the range of peripheral edge portions of the cases 23 and 25.

In addition, third cushioning ribs 37 are respectively formed at corners of the partitioned chambers 27 in such a manner as to surround ridge line portions of the respective cartridges 21. Since the third cushioning ribs 37 are respectively disposed at ends where the side provided with the first cushioning ribs 39 and the side provided with the second cushioning ribs 35 meet, it is possible to effectively prevent the deformation of the ridge line portions of the cartridges such as when the accommodating case 100 with the cartridges 21 accommodated therein has dropped.

Here, as parts of surplus portions which are created due to the fact that the plurality of cartridges 21 are collectively accommodated in blocks, flanges 31 having the function of impact absorption respectively extend transversely on both end sides, in the axial direction of the magnetic tape-wound reel, of the upper case 23 and the lower case 25. A handle opening 33 for defining a handle for carrying the case is provided in the respective flange 31. Namely, the arrangement provided is such that, as for the accommodating case 100 with the upper case 23 and the lower case 25 engaged with each other, the user is able to put his or her fingers into the handle opening 33 on one side and grip the handle to carry the accommodating case 100 with the other flange 31 side facing downward. Alternatively, the accommodating case 100 can be carried by gripping the handles defined by the handle openings 33 on both sides with both hands and by setting the accommodating case 100 horizontally.

When the accommodating case 100 is carried by gripping the handle defined by the handle opening 33 on one side with one hand with the other flange 31 side facing downward, if and when the accommodating case 100 slips off the fingers, the accommodating case 100 at the lower flange 31 side collides against the floor surface. At this time, the flanges 31, which serve as impact absorbing portions, are deformed by the load of the accommodating case 100 and the cartridge groups 29, and the impact energy is absorbed by that deformation, thereby alleviating the impact for the accommodated cartridges 21.

Generally, the cartridges 21 are weak against an impact applied in the axial direction of the reel. This is because there are cases where the jumping out of the tape has occurred at an end face of the wound tape, and if the tape is crushed or bent as a tape end abuts against a reel flange due to the jumping out of the tape, the smooth taking-up and paying-out of the magnetic tape is hampered, making the read/write impossible in a worst case. In this embodiment, as the flanges 31 serving as the impact absorbing portions are disposed in the axial direction of the reel of the cartridge 21, the impact resistance in the axial direction of the reel, which is weak against the impact, can be improved.

Fig. 4 is an external view of essential portions of the accommodating case, illustrating the cushioning ribs provided on the outer wall surfaces of the partitioned chamber. The cushioning ribs 35 and 39 are formed on the wall surfaces of each partitioned chamber 27 in such a manner as to protrude outwardly from the partitioned chamber 27. Accordingly, even if an object has collided against the accommodating case 100 from outside, since a gap is formed between the outer wall surface of the case and the cartridges 21 by the cushioning ribs 35 and 39, these cushioning ribs 35 and 39 act as a cushioning material to enhance the impact resistance. Particularly at the corners of the partitioned chambers 27, the cushioning ribs 37 which surround the ride line portions of the cartridges 21 are formed as shown in Fig. 4. Thus, an impact absorbing function is provided for effectively preventing the deformation of the ridge line portions of the cartridges in cases such as where the accommodating case 100 has dropped with the cartridges 21 accommodated therein.

The accommodating case 100 is comprised of the upper case 23 and the lower case 25 of an identical structure, which are each provided with a protruding portion (protrusion) 41 and a recessed portion (recessed groove) 43 which are adapted to engage with counterparts of another case. In this embodiment, in the peripheral portion surrounding the four partitioned chambers 27, the protrusion 41 and the recessed groove 43 are formed on the upper side and the lower side, respectively, symmetrically about a case center line 45 shown in Fig. 2. Namely, on each of the upper case 23 and the lower case 25, the protrusion 41 and the recessed groove 43, which are both U-shaped in a plan view, are formed continuously on one side and on the other side, respectively, with the center line 45 located therebetween.

When the upper case 23 and the lower case 25 of the identical structure are combined vertically, the protrusions 41 are fitted into the recessed grooves 43 and are engaged with each other. As a result, the partitioned chambers 27 are hermetically sealed, so that water resistance can be obtained, and the accommodating case 100 is capable of floating on water. In addition, the cartridges 21 can be protected from dust, moisture, splashed water, and other harmful substances. Namely, one case is used both as a cover and as a part of the body. Thus, by using one kind of cases which have been molded by one mold, the accommodating case 100 is structured in which the partitioned chambers 27 which are openable by the protrusions 41 and the recessed grooves 43 are formed.

In addition, a partition portion 47 is provided adjacent ones of the partitioned chambers 27. This partition portion 47 is formed with a shape and a depth, which will be described later, so that its deformation with respect to an impact is facilitated. Namely, when the accommodating case 100 has dropped, the impact is alleviated as the partition portions 47 are deformed. The partition portions 47 are provided in any directions so that the dropping direction may be from the side where the flange 31 is provided or from a perpendicular direction thereto. In this embodiment, crisscross partition portions 47 are formed in such a manner as to partition the interior of the accommodating case 100 into the four partitioned chambers 27 disposed on four sides.

The accommodating case 100 is so arranged that as the partition portions 47 are interposed between adjacent ones of the partitioned chambers 27 in which the cartridge groups 29 are accommodated, even in cases where impacts are applied to the respective cartridge groups 29 due to dropping or the like, the partition portions 47 are adapted to absorb the impacts, so that an impact force due to the inertia of the cartridge groups 29 does not affect the cartridge groups 29 between each other.

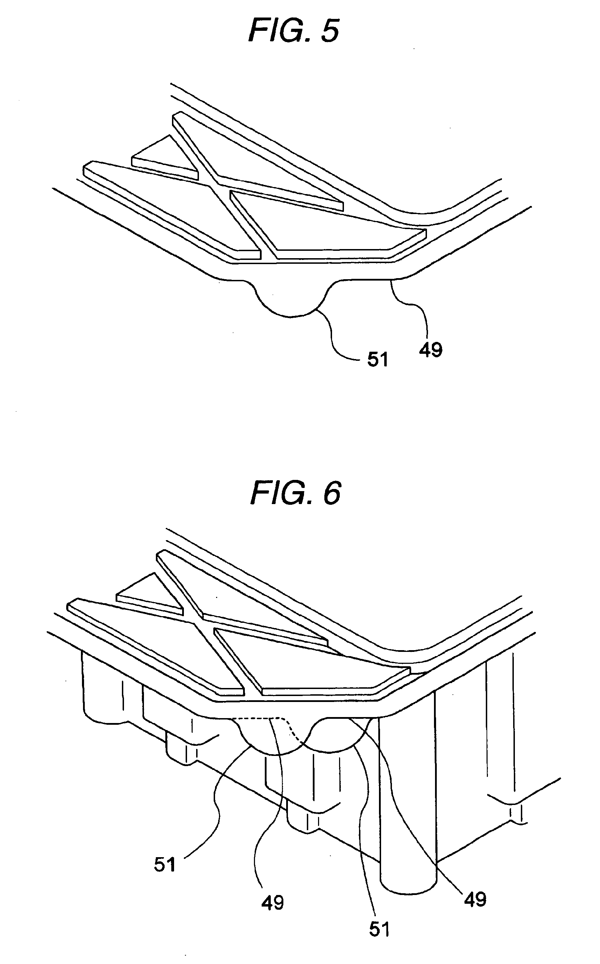

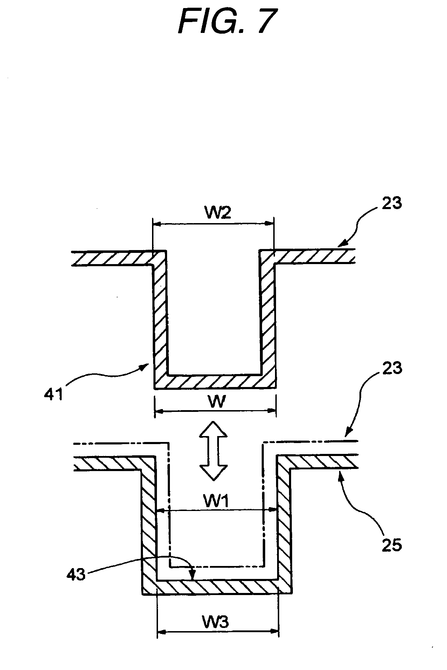

Fig. 5 is an enlarged view of an essential portion, illustrating a tab provided projectingly on a bevel portion of the accommodating case flange. Fig. 6 is a perspective view of essential portions, illustrating the mutual positional relationship of the respective tabs of the upper case and the lower case engaged with each other.

There are cases where the accommodating case 100 with the cartridge groups 29 accommodated therein is accommodated in an unillustrated corrugated cardboard box having an inner shape substantially identical to the outer shape of the accommodating case 100. For this reason, to improve the feature of taking out from the corrugated cardboard box, a bevel portion 49 is formed at each opposite end of the flange 31, the bevel portion 49 being constituted by a side portion which is inclined approximately 45 degrees relative to the flange 31. As a result, as for the accommodating case 100 accommodated in the corrugated cardboard box, triangular holes are respectively formed by these bevel portions 49 with respect to the inner wall surfaces of the corrugated cardboard box, so that fingers can be inserted therein to facilitate the taking-out operation.

Tabs 51 are extendedly provided on the respective peripheral edges, i.e., the flanges 31, of the upper case 23 and the lower case 25. In this embodiment, each of the upper case 23 and the lower case 25 is formed by a quadrangular outer shape having four corner portions at its periphery. At at least one corner portion of each o'f the upper case 23 and the lower case 25, the bevel portion 49 is formed by removing this corner portion along the inclined side. In addition, at least one tab 51 is formed on the inner side of a quadrangular region enveloping the four outer sides of each of the cases 23 and 25. If the tab 51 is extendedly provided on this bevel portion 49 so as not to project from the aforementioned quadrangular region, even if the accommodating case 100 is accommodated in a corrugated cardboard box having the same inner shape as the outer shape of the case, the tab 51 does not hinder the accommodation.

With the accommodating case 100, with respect to the upper case 23 and the lower case 25 integrated by mutually engaging the protrusions 41 and the recessed grooves 43, it is easily possible to cause opening forces to act by holding the tabs 51 provided at the peripheral edges of the respective cases and moving them in mutually opposite directions. In other words, the cases can be reliably engaged with each other with such a large engaging force that the disengagement would be difficult if the tabs 51 were not provided.

In this embodiment, the bevel portions 49 are respectively formed at the four corner portions. In addition, in this embodiment, the tabs 51 are respectively provided at the pairs of bevel portions 49 with the center line 45 (shown in Fig. 2) located therebetween. The tabs 51 are each disposed in such a manner as to be offset from the center of the inclined side of the bevel portion 49. Namely, as shown in Fig. 5, the tab 51 is offset toward one side from the center of the bevel portion 49. In the case of the upper case 23 shown in Fig. 2, for example, the tab 51 which is extendedly provided at the bevel portion 49 at upper left is offset diagonally downward toward left, and the tab 51 which is extendedly provided at the bevel portion 49 at upper left is offset diagonally downward toward right.

When the upper case 23 and the lower case 25 of the identical structure molded by the same mold are superposed one on top of the other vertically with the partitioned chambers 27 formed therein, as shown in Fig. 1, the tabs 51 do not completely overlap with each other, and are disposed in a state of being offset along the inclined side. As a result, as the both tabs 51 are moved away from each other in vertically opposite directions, the upper case 23 and the lower case 25 can be easily disengaged.

Fig. 7 is an enlarged cross-sectional view illustrating the shapes of the recessed portion and the protruding portion.

As described above, as the tabs 51 are provided, the protrusions 41 and the recessed grooves 43 can be provided with a structure whereby they can be engaged with a higher engaging force than in a case where the tabs 51 are not provided. Specifically, the opening width W1 of the recessed groove 43 can be formed to be slightly smaller than the width W of the protrusion 41. In this case, since both the upper case 23 and the lower case 25 are formed of a soft material, the case members are mutually deformed, and are firmly fitted to each other. In addition, the protrusion 41 may be formed in a tapered shape in which the width W of its projecting distal end is wide and the width W2 of its proximal end is slightly small. In this case, the recessed groove 43 is formed as a tapered groove in which the width W3 of the groove bottom is equal to the width W of the projecting distal end of the protrusion 41. By forming the protrusion 41 and the recessed groove 43 with such a slightly tapered shape, it is possible to impart a high engaging force while ensuring high sealability.

Further, at an outermost periphery of each of the upper case 23 and the lower case 25, a stepped bent portion is formed by slightly bending its peripheral edge. In the same way as the aforementioned protrusion 41 and recessed groove 43, this stepped bent portion is formed on either side symmetrically about the center line 45. In consequence, when the upper case 23 and the lower case 25 are superposed on each other, the stepped bent portion covers the peripheral edge of the other case so as to improve dust-tightness and water-tightness.

Furthermore, large and small quadrangular frame portions 53a and 53b, which are capable of fitting to counterparts of the other case, protrude from outer bottom surface portions of the respective partitioned chambers 27. As a result, even if the accommodating cases 100 are stacked vertically, the quadrangular frame portions 53a and 53b on the lower surface of the upper accommodating case 100 are fitted to the quadrangular frame portions 53a and 53b on the upper surface of the lower accommodating case 100 to restrict their relative lateral offset, thereby preventing a collapse at the time of stacking.

Each of the upper case 23 and the lower case 25 is constituted by an integrally molded piece of a plastic resin. For this reason, the upper case 23 and the lower case 25 having toughness for reliably protecting the cartridges as well as appropriate impact absorption can be mass produced easily at low cost by using a material which is relatively easy to handle.

This plastic resin may include any one of, for example, polyethylene terephthalate, polypropylene, and polystyrene. As the plastic resin is any one of polyethylene terephthalate, polypropylene, and polystyrene, the material is easily available, recovery and reuse after the products have become waste products are possible, and easy and low-cost vacuum molding is possible.

In addition, the plastic resin should preferably be translucent. If so, when the upper case 23 and the lower case 25 are engaged with each other, and the partitioned chambers 27 are set in the hermetically sealed state, the cartridges 21 accommodated in the partitioned chambers 27 are visible from the outside, so that the state of accommodation of the cartridges 21 in the hermetically sealed partitioned chambers 27 can be easily grasped.

In addition, as each of the upper case 23 and the lower case 25 is formed by using a plastic resin sheet having a thickness of 0.5 to 2.0 mm and subjecting it to drawing, the minimum structural strength of the partitioned chambers for accommodating the plurality of cartridge groups can be economically ensured. Further, the overall weight of the case can be set to a minimum while satisfying the minimum strength. In addition, as the case is formed with the aforementioned thickness, appropriate deformation becomes possible when an external force is applied, thereby making it possible to optimally secure the impact absorbing action with respect to the accommodated cartridges. In other words, if the case is thinner than the aforementioned thickness, the case becomes excessively deformable, so that the impact absorption effect declines. On the other hand, if the case is thicker than the aforementioned thickness, the cartridge is difficult to deform, so that the impact force is transmitted directly to the accommodated cartridges. In this construction, since the sheet thickness of the plastic resin is set to the aforementioned thickness, the formation of optimal impact absorbing portions (crushable zones) becomes possible.

The above-described accommodating case 100 is accommodated in the unillustrated corrugated cardboard box having an inner shape substantially identical to the outer shape of the accommodating case 100. When the accommodating case 100 is removed from the corrugated cardboard box after being opened, the accommodating case 100 can be easily pulled out by inserting fingers or the like into the handle opening 33 formed in the flange 31. In addition, to improve the feature of taking out from the corrugated cardboard box, the bevel portion 49 is formed at each opposite end of the flange 31, the bevel portion 49 being constituted by the side portion which is inclined approximately 45 degrees relative to the flange 31. As a result, as for the accommodating case 100 accommodated in the corrugated cardboard box, triangular holes are respectively formed by these bevel portions 49 with respect to the inner wall surfaces of the corrugated cardboard box, so that fingers can be inserted therein to facilitate the taking-out operation.

As for the above-described accommodating case 100, in the empty state before the accommodation or removal of the cartridges 21, the upper case 23 is rotated 180 degrees upside down as shown in Fig. 1, and is superposed on the inner side of the lower case 25.

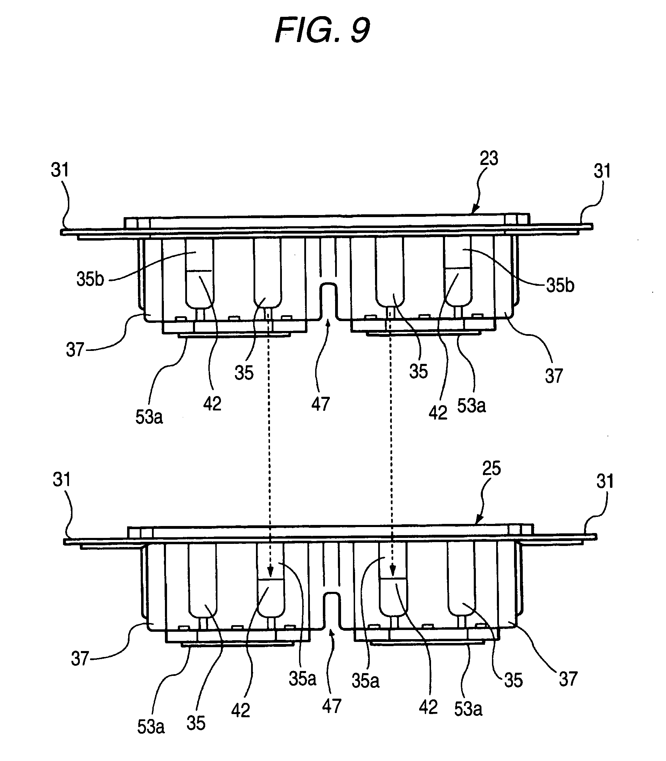

As shown in Fig. 9, before the rotated upper case 23 is superposed, as for the second cushioning ribs 35 on the front side, the two ribs in the center are deep, and the two ribs on both outer sides thereof (second cushioning ribs 35b) are shallow with the stoppers 42. Meanwhile, in the case of the lower case 25 which is not rotated, as for the second cushioning ribs 35 on the front side, the two ribs in the center (second cushioning ribs 35a) are shallow with the stoppers 42, and the two ribs on both outer sides thereof are deep.

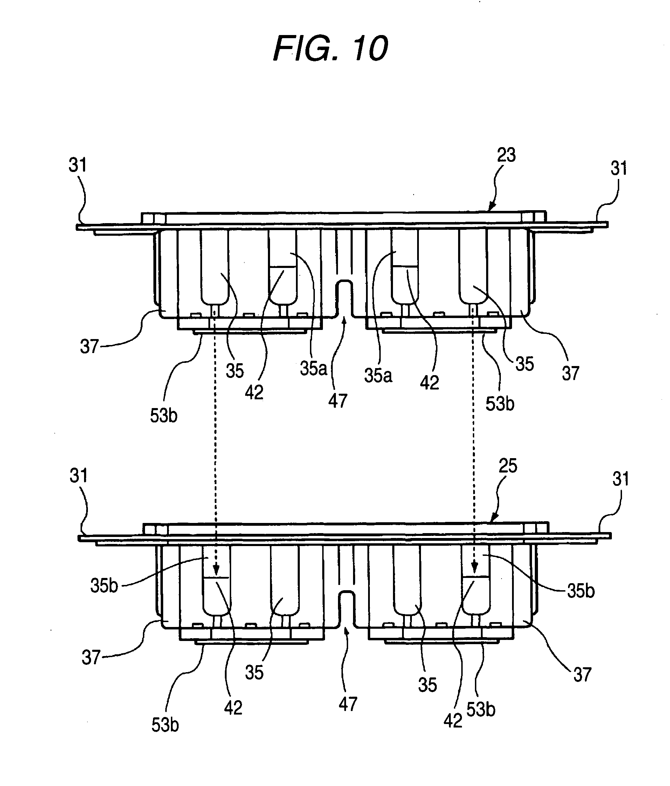

As shown in Fig. 10, before the rotated upper case 23 is superposed, as for the second cushioning ribs 35 on the rear side, the two ribs in the center (second cushioning ribs 35a) are shallow with the stoppers 42, and the two ribs on both outer sides thereof are deep. Meanwhile, in the case of the lower case 25 which is not rotated, as for the second cushioning ribs 35 on the rear side, the two ribs in the center are deep, and the two ribs on both outer sides thereof (second cushioning ribs 35b) are shallow with the stoppers 42.

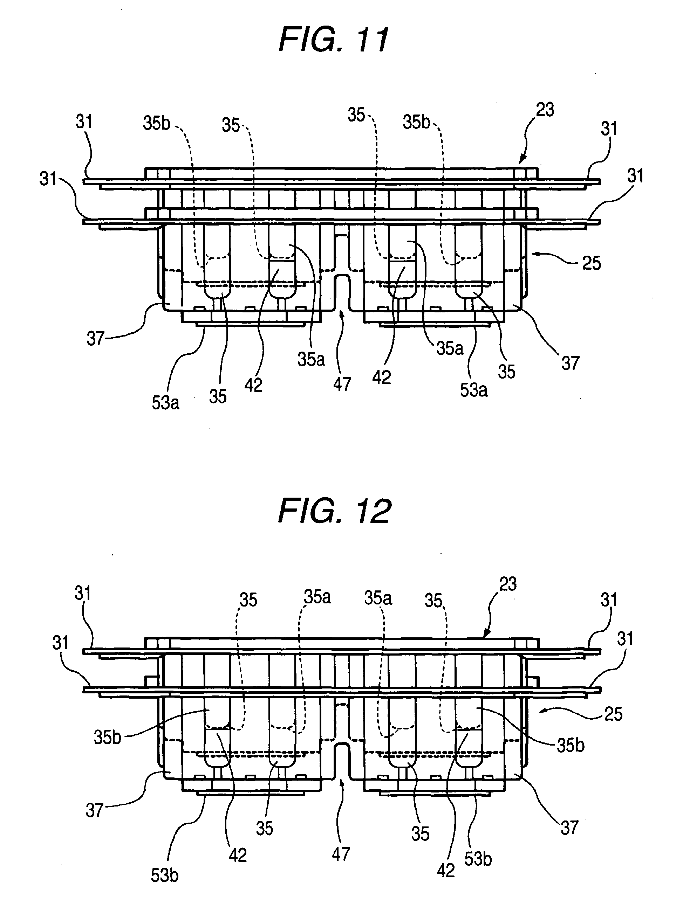

As shown in Fig. 11, at the time when the upper case 23 is superposed on the inner side of the lower case 25, the second cushioning ribs 35 of the upper case 23 are inserted over the second cushioning ribs 35 of the lower case 25, and on their front sides the distal ends of the two central ribs of the second cushioning ribs 35 of the upper case 23 respectively abut against the stoppers 42 of the two central ribs (second cushioning ribs 35a) of the second cushioning ribs 35 of the lower case 25.

As shown in Fig. 12, at the time when the upper case 23 is superposed on the inner side of the lower case 25, the second cushioning ribs 35 of the upper case 23 are inserted over the second cushioning ribs 35 of the lower case 25, and on their rear sides the distal ends of the two ribs on both outer sides of the second cushioning ribs 35 of the upper case 23 respectively abut against the stoppers 42 of the two ribs on both outer sides (second cushioning ribs 35b) of the second cushioning ribs 35 of the lower case 25. As a result, since the second cushioning ribs 35 are prevented from being further inserted below the position of abutment against the stoppers 42, the upper case 23 is held at a position where its both flanges 31 are spaced away from those of the lower case 25. Consequently, the upper case 23 and the lower case 25 which are superposed after use are not brought into close contact with each other on their overall surfaces, and a large space can be secured between their upper and lower flanges 31. Thus, the upper case 23 can be easily separated from the lower case 25 by such as pulling up the flange 31 of the upper case 23. It should be noted that after pluralities of upper cases 23 and lower cases 25 have been consecutively stacked in the same way as described above, they can be easily separated one by one.

Although in this embodiment the stoppers 42 are formed in the second cushioning ribs 35a and 35b as the biting preventing means, it is possible to impart different shapes to portions at such diagonally opposing positions insofar as they are within the range of peripheral edge portions of the cases 23 and 25 and do not affect the engagement of the cases.

Therefore, according to the above-described cartridge accommodating case 100, at least one partitioned chamber 27 is formed for holding the cartridge group 29 formed into a block by juxtaposing the plurality of cartridges 21 in their thicknesswise direction. Hence, as compared with the case where the plurality of cartridges 21 are dispersedly accommodated in the same accommodation area, by the portion in which the plurality of cartridges 21 are put together in one block, it becomes possible to secure surplus areas which do not contribute to the accommodation. By using these surplus area portions as impact absorbing portions (so-called crushable zones), it is possible to absorb the impact such as at the time of the dropping of the case and improve the impact resistance against the accommodated cartridges 21.

In addition, since it is not necessary to accommodate the plurality of cartridges 21 individually, the plurality of cartridges 21 superposed and held in their thicknesswise direction can be collectively accommodated in the partitioned chamber 27, and accommodation can be performed efficiently in a short time, thereby making it possible to substantially improve the efficiency in the accommodating operation.

Furthermore, according to the above-described cartridge accommodating case 100, with respect to the upper case 23 and the lower case 25 integrated by mutually engaging the protrusions 41 and the recessed grooves 43, mutually moving-away forces can be respectively caused to act by holding the tabs 51 provided on their peripheral edges and moving them in mutually opposite directions. Even in a case where the engagement is firm, it becomes possible to disengage the protrusions 41 and the recessed grooves 43 from each other and easily open the accommodating case 100 only when it is required to do so. In other words, the cases can be reliably engaged with each other with such a large engaging force that the disengagement would be difficult if the tabs 51 were not provided.

It should be noted that although in the above-described embodiment an example has been described in which the upper case 23 and the lower case 25 are molded by the same mold and are of an identical structure, the accommodating case in accordance with the invention may be one in which the upper case and the lower case molded by different molds and having different structures are combined. In this case as well, an advantage is offered in that it is possible to obtain excellent case openability similar to the one described above.

In addition, according to the above-described cartridge accommodating case 100, after it been used and the cartridges 21 have been removed, when the upper case 23 and the lower case 25 are superposed on each other and are then separated from each other, the both cases 23 and 25, which have not bitten onto each other, can be easily separated from each other.

This application is based on Japanese Patent application JP 2006-20750, filed January 30, 2006, and Japanese Patent application JP 2006-23192, filed January 31, 2006, the entire contents of which are hereby incorporated by reference, the same as if set forth at length.

## Claims

1. A cartridge accommodating case for accommodating flat body-shaped cartridges in each of which a reel with a magnetic tape wound therearound is disposed, comprising:
an upper case; and
a lower case, the upper case and the lower case being adapted to be superposed on each other to form at least one partitioned chamber for holding a cartridge group formed into a block by juxtaposing a plurality of cartridges in a thicknesswise direction thereof,
wherein a tab is extendedly provided on a peripheral edge of each of the upper case and the lower case.

2. The cartridge accommodating case according to claim 1, wherein each of the upper case and the lower case is formed by a quadrangular outer shape having four corner portions at its periphery, and a bevel portion is formed at at least one corner portion of each of the upper case and the lower case by removing the corner portion along an inclined side, the tab being formed on the bevel portion.

3. The cartridge accommodating case according to claim 2, wherein the tab extendedly provided on the bevel portion is formed on an inner side of a quadrangular region enveloping four outer sides of the case.

4. The cartridge accommodating case according to claim 2, wherein the bevel portion is formed at at least two adjacent ones of the corner portions, and the tabs extendedly provided respectively at the two corner portions are each disposed in such a manner as to be offset from a center of the inclined side of the bevel portion.

5. The cartridge accommodating case according to claim 1, wherein each of the upper case and the lower case is constituted by an integrally molded piece of a plastic resin.

6. The cartridge accommodating case according to claim 5, wherein the plastic resin includes at least one of polyethylene terephthalate, polypropylene, and polystyrene.

7. The cartridge accommodating case according to claim 5, wherein the plastic resin is translucent.

8. The cartridge accommodating case according to claim 5, wherein each of the upper case and the lower case is formed by subjecting a plastic resin sheet having a thickness of from 0.5 to 2.0 mm to drawing.

9. The cartridge accommodating case according to claim 1, wherein the upper case and the lower case have an identical structure for forming the partitioned chamber by engaging with each other and each have a tapered shape in a direction away from an engaging portion thereof, and biting preventing means are provided which have different shapes at portions at diagonally opposing positions within a range of a peripheral edge portion of the case.

10. The cartridge accommodating case according to claim 9, wherein each of the biting preventing means is a portion of a cushioning rib which is projectingly formed on an outer side surface including the range of the peripheral edge portion of the case.
